# DEMANDE DE BREVET EUROPEEN

(11) **EP 1 022 105 A1**
(43) Date de publication de la demande: **26.07.2000**
(21) Numéro de dépôt: 99870011.6
(22) Date de dépôt: 22.01.1999
(51) Int. Cl.: B29C 33/12, B29C 44/56, C08J 9/34

(54) **Article à noyau mousseux et avec une couche de couverture et son procédé de fabrication**

(71) Demandeur: Gonsette, Bernard, 6110 Montigny-le-Tilleul (BE); Vanhamme, Eric, 6032 Mont-sur-Marchienne (BE)
(72) Inventeur: Gonsette, Bernard, 6110 Montigny-le-Tilleul (BE); Vanhamme, Eric, 6032 Mont-sur-Marchienne (BE)
(74) Mandataire: Van Malderen, Joelle

(57) **Abrégé**

Pièce caractérisée en ce qu'elle est constituée par une mousse constituée par un noyau (3) préformé à cellules ouvertes présentant un poids spécifique de l'ordre de 110 kg/m³ à base d'une résine de polyuréthane ou de polystyrène et d'une peau (13) constituée par une résine bi-composants basse pression d'un poids spécifique de l'ordre de 4.000 kg/m³ qui a été injectée à basse pression autour du noyau (3) par gavage dans un moule (1, 2) contenant ledit noyau (3), en ménageant un espacement entre la surface externe du noyau (4) et la surface interne du moule (1, 2) de l'ordre de 4 à 6 mm.

## Description

### Objet de l'invention

La présente invention concerne un produit composite nouveau, constitué essentiellement par un noyau formé par une mousse à cellules ouvertes de basse densité pourvue d'une peau en une résine bi-composants compacte mise en oeuvre à basse pression.

L'invention concerne également un procédé nouveau permettant la réalisation de tels produits et s'étend à l'utilisation de cette technique pour la réalisation d'accessoires ou d'équipements extérieurs de véhicule de dimension relativement importante du type ailerons, spoilers, etc.

### Arrière-plan technologique

On a recours actuellement à de nombreux accessoires et équipements extérieurs de véhicule réalisés au départ de résines. Une caractéristique essentielle de ces matières est qu'elles doivent être recyclables.

Afin de répondre aux demandes des utilisateurs, on souhaite équiper les véhicules d'une série d'accessoires soit en première monte, soit après l'achat du véhicule afin de « personnaliser » celui-ci. Cependant, la caractéristique essentielle de ce type de produits qui peuvent être des ailerons, des spoilers, voire des pare-chocs etc., est le fait qu'ils sont produits en série relativement restreinte, évoluant généralement d'année en année, même pour un modèle ou une série d'un type particulier.

De ce fait, le recours à des moules onéreux dont le prix de revient est de l'ordre d'au moins 50.000 Euro n'est généralement pas possible.

Pour certaines formes particulières d'accessoires, on se heurte à la difficulté supplémentaire que la forme particulière non plane exerce des contraintes non-négligeables pour les équipements de production, en particulier les moules.

A titre d'illustration, on peut citer le cas d'un pare-chocs qui comporte un « retour » vers les flancs du véhicule. Lorsqu'on désire transposer, en vue de les réaliser en matière plastique, de telles formes qui sont obtenues jusqu'à présent par emboutissage de tôles métalliques, on se heurte à des difficultés importantes de conception des moules qui, en vue de respecter les angles de la contre-dépouille, doivent être réalisées en plusieurs pièces afin de permettre le démoulage du produit.

Il est bien entendu possible de parer à cette difficulté en prévoyant des masses plus importantes de résine afin de respecter les angles de contre-dépouille mais cette solution entraîne une consommation de matière importante et une augmentation du poids.

Afin d'occuper tout le volume nécessaire, sans compliquer exagérément la forme des moules, une solution envisageable consisterait à réaliser des objets du type décrit sous forme d'un noyau moussé pourvu d'une peau extérieure.

Cette solution pour être satisfaisante, doit encore tenir compte du fait que les équipements et accessoires doivent être pourvus d'éléments de fixation et d'ancrage permettant de visser la pièce sur le véhicule.

Actuellement, la technique habituelle de réalisation par moulage de pièces constituées par un noyau pourvu d'une peau repose sur le principe suivant : on réalise d'abord la peau par extrusion-soufflage dans un moule et on injecte ensuite une mousse dans la peau ainsi formée.

Jusqu'à présent, ce procédé ne donne pas de résultat satisfaisant du fait que des irrégularités apparaissent sur la surface extérieure de la peau qui résultent de l'expansion de la mousse qui a été injectée dans la gaine préformée devant constituer la peau.

Ces irrégularités se présentent sous l'aspect de défauts de surface telles que des lacunes, des « vagues » et même quelquefois des percements de la mousse qui crèvent la peau.

### RESUME DE L'ETAT DE LA TECHNIQUE

Dans le document EP 0 069 076 A1 on a décrit une technique, apparemment réservée à la réalisation de panneaux plans, consistant à placer d'abord un noyau formé par une mousse légère, par exemple de polystyrène dans un moule en deux parties. Dans ce moule, on place ensuite une couche de support et on injecte ensuite une peau au départ d'une seconde résine sans que des explications pratiques n'apparaissent au sujet de la procédure utilisée, si ce n'est qu'il existe une zone d'imprégnation de la résine d'injection jusqu'au noyau à travers la couche de support.

Dans le document US 5 300 264 on fait référence à ce même document en supposant que le noyau « flotte » dans la résine destinée à former la peau.

Dans les deux documents précités, on préconise certaines compositions de matière qui permettraient d'obtenir des produits moulés constitués par un noyau englobés dans une peau.

### ELEMENTS CARACTERISTIOUES DE L'INVENTION

Selon l'invention, il est proposé une pièce du type précité, constituée par une mousse constituée par un noyau préformé à cellules ouvertes présentant un poids spécifique de l'ordre de 110 kg/m³ à base d'une résine de polyuréthane ou de polystyrène et d'une peau constituée par une résine bi-composants basse pression d'un poids spécifique de l'ordre de 4.000 kg/m³ qui a été injectée à basse pression autour du noyau par gavage dans un moule contenant ledit noyau, en ménageant un espacement entre la surface externe du noyau et la surface interne du moule de l'ordre de 4 à 6 mm.

La résine bi-composants destinée à réaliser la peau est avantageusement une résine classique à base de polyisocyanate polyol du type injectable à basse pression, comme décrit dans US 5 300 264 A.

La nature du noyau, pour autant que les conditions de poids spécifique soient respectées, est largement quelconque. On a recours de préférence à un noyau du type polyuréthanne ou EPS. Les produits cités dans US 5 300 264 peuvent convenir.

Lorsqu'il est question de poids spécifique de l'ordre de 110 kg/m³ et 4.000 kg/m³, il faut comprendre que la valeur indiquée peut fluctuer dans une marge de 10% au dessus ou sous la valeur indiquée.

Bien entendu pour ce qui concerne le procédé, cette technique présuppose que le noyau, préalablement formé, soit disposé dans le moule en ayant recours à des fixations qui maintiennent le noyau aussi bien vers le haut que vers le bas à la distance souhaitée. Dans ces conditions opératoires, il n'est pas nécessaire de recourir à un moule métallique, particulièrement onéreux à réaliser, le moule pouvant être réalisé en une résine epoxy présentant une résistance mécanique et thermique suffisante.

Pour pouvoir travailler dans de bonne condition, il convient que le noyau ait été chauffé à environ 40°C, soit en le pré-chauffant, soit en le maintenant quelques minutes dans le moule chaud avant l'injection de la résine bi-composants.

Contrairement aux techniques classiques qui nécessitent généralement l'application d'une couche de primer à l'intérieur du moule pour faciliter le démoulage, le recours à un tel primer n'est pas nécessaire selon l'invention.

La masse spécifique pour la mousse est suffisante pour que des éléments de fixation telles que des vis puissent être utilisés pour le montage de l'objet moulé.

Lors du démoulage, les fixations peuvent être retirées ou être maintenues en place.

Le noyau comporte au moment de son introduction dans le moule en vue de la formation de la peau, des inserts métalliques ou autres servant au montage ultérieur sur le véhicule auquel la pièce est destinée.

### DESCRIPTION D'UNE FORME PREFEREE DE L'INVENTION

L'invention sera décrite en référence à une forme d'exécution d'un pare-chocs de voiture comportant un retour enveloppant vers le flanc de la voiture.

Ce type de pièce est particulièrement difficile à réaliser sans poids excessif, à cause de sa forme particulière et à cause des contraintes lors du démoulage.

### BREVE DESCRIPTION DES FIGURES

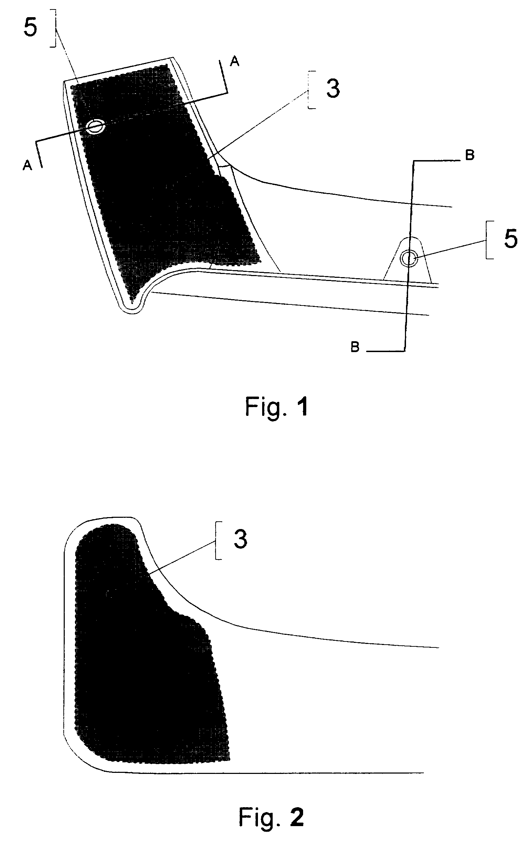

La Fig. 1 représente en perspective un moule et un contre-moule en vue de former sur le noyau représenté, une peau ;
La Fig. 2 est une vue de dessus de ce moule et du noyau ;

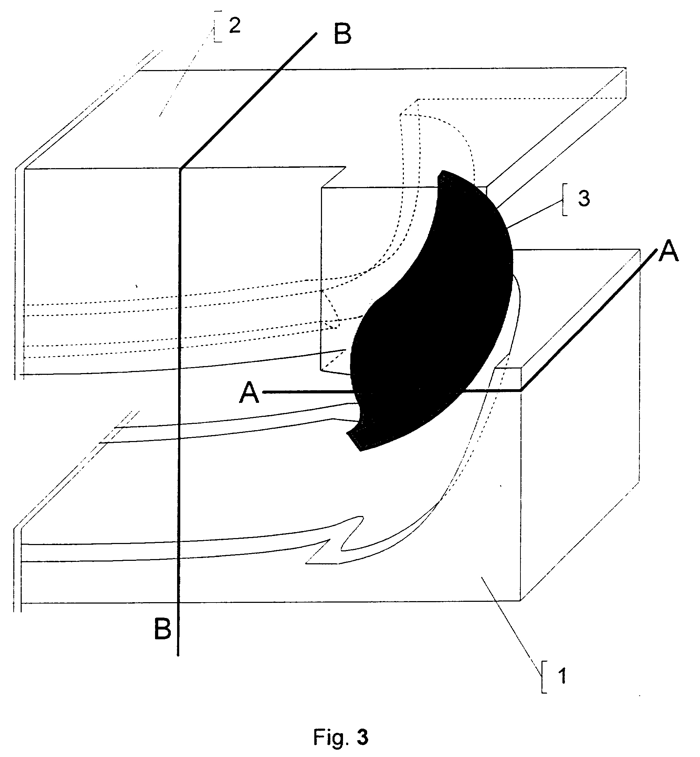

La Fig. 3 est une vue de face correspondante ;
La Fig. 4 est une coupe A-A selon les figures 1 et 2 ; et

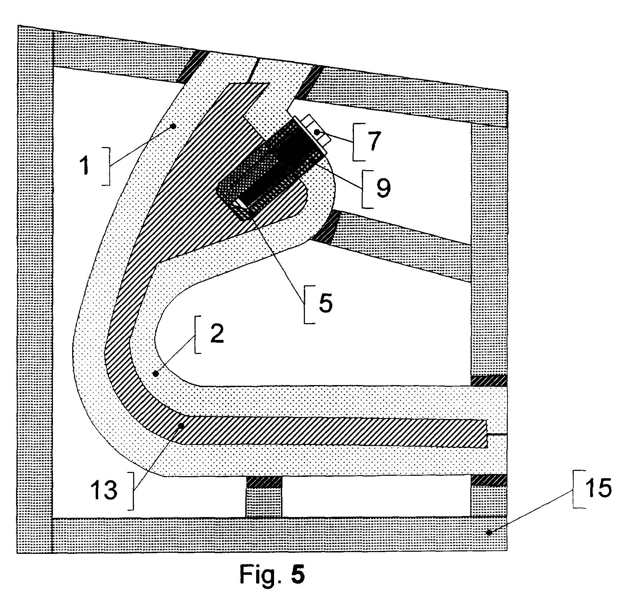

La Fig. 5 est une coupe B-B selon les figures 1 et 2.

Dans les dessins, des repères de références identiques sont utilisés pour des éléments similaires ou identiques.

Selon l'invention, on utilise une unité de moulage fermée comportant un moule 1 correspondant à la forme extérieure avant visible du pare-chocs que l'on veut obtenir.

Un contre-moule 3 complète l'unité de moulage qui peut être fermée de manière hermétique.

Un noyau 3 est placé dans ce moule et y est maintenu en ayant recours à des fixations de façon à réaliser un espacement entre la surface externe du noyau et la surface interne du moule et du contre-moule de l'ordre de 4 à 6mm.

Des inserts de fixation portant le repère général 5 comportant un tube de guidage 7 en une matière appropriée, généralement en acier, et une vis de fixation 9 de l'insert peuvent être prévus.

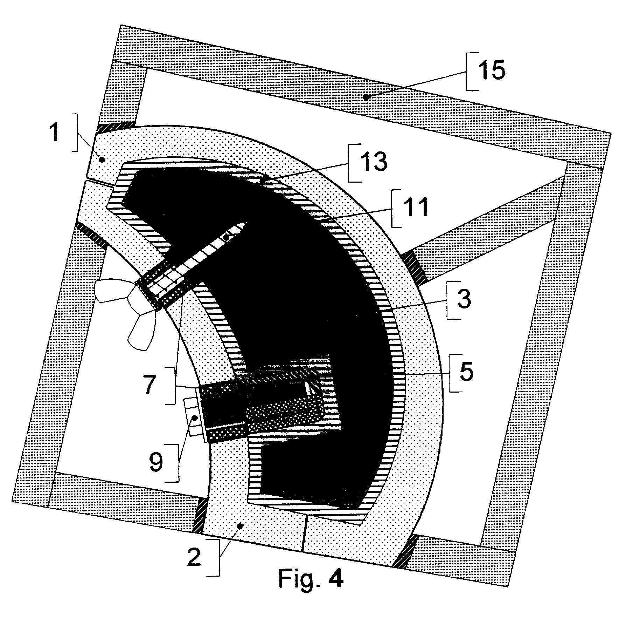

Pour maintenir le noyau dans le moule on a recours de préférence à une vis de fixation 11 reçue dans un tube de guidage approprié qui est dans le cas représenté à la figure 4, conçu sous forme d'une vis papillon afin de pouvoir être facilement retirée après le démoulage.

Le moule est placé dans un caisson de renfort 15 et la peau 13 est injectée dans le moule en veillant à ce que le noyau 3 ait été amené à une température de l'ordre de 40°C, par mise à température préalable.

Cette mise à température lors du démarrage de l'opération de moulage peut être réalisée par un chauffage préalable du noyau. Lors de la production cependant, l'effet exothermique résultant de l'utilisation de la résine bi-composants pour la peau suffit à amener rapidement le noyau à la température souhaitée, si des cadences de production appropriées sont maintenues.

A titre d'illustration, les différentes étapes de production et la nature des constituants de la pièce sont décrites dans l'exemple qui suit.

### Exemple 1

En vue de réaliser un pare-chocs sous forme de deux demi-pièces présentant une longueur en développement de l'ordre de .... et comportant une partie courbée destinée à recouvrir partiellement les flancs de la voiture d'une longueur de 30 cm, on a utilisé une résine du type : polyuréthane sous forme d'une mousse destinée à former le noyau 3.

Le moule et le contre-moule sont eux-mêmes réalisés en résine epoxy du type « ARALDITE »®.

La résine injectée destinée à former la peau est un produit du type « UREOL »®.

Après avoir fixé à l'aide de vis de fixation le noyau 3 dans le moule et contre-moule 1 et 2, et avoir procédé à la mise en place des inserts de fixation, on injecte sous une pression de 18 kg la résine destinée à former la peau.

La durée de cette injection est de l'ordre de 35 sec et, après un temps de maintien de 15 mn destiné à permettre la formation et le durcissement de la peau, on peut procéder au démoulage.

## Revendications

1. Pièce caractérisée en ce qu'elle est constituée par une mousse constituée par un noyau (3) préformé à cellules ouvertes présentant un poids spécifique de l'ordre de 110 kg/m³ à base d'une résine de polyuréthane ou de polystyrène et d'une peau (13) constituée par une résine bi-composants basse pression d'un poids spécifique de l'ordre de 4.000 kg/m³ qui a été injectée à basse pression autour du noyau (3) par gavage dans un moule (1, 2) contenant ledit noyau (3), en ménageant un espacement entre la surface externe du noyau (4) et la surface interne du moule (1, 2) de l'ordre de 4 à 6 mm.

2. Pièce selon la revendication 1, caractérisée en ce que la résine bi-composants destinée à réaliser la peau est une résine classique à base de polyisocyanate polyol du type injectable à basse pression.

3. Pièce selon la revendication 1 ou 2, caractérisée en ce que le noyau est du type polyuréthanne ou EPS.

4. Procédé de production d'une pièce selon l'une quelconque des revendications 1 à 3, caractérisé en ce que le noyau (3), préalablement formé est disposé dans le moule (1, 2) en ayant recours à des fixations (5) qui maintiennent le noyau (3) aussi bien vers le haut que vers le bas à la distance souhaitée

5. Procédé selon la revendication 4, caractérisé en ce que le moule (1, 2) est réalisé en une résine epoxy présentant une résistance mécanique et thermique suffisante.

6. Procédé selon la revendication 4 ou 5, caractérisé en ce que le noyau (3) est chauffé à environ 40°C, soit en le pré-chauffant, soit en le maintenant quelques minutes dans le moule chaud avant l'injection de la résine bi-composants.

7. Procédé selon l'une quelconque des revendications 4 à 6, caractérisé en ce que le noyau comporte au moment de son introduction dans le moule en vue de la formation de la peau, des inserts (5) métalliques ou autres servant au montage ultérieur sur le véhicule auquel la pièce est destinée.

8. Utilisation des pièces selon l'une quelconque des revendications 1 à 3, comme accessoires ou équipements extérieurs d'automobile, en particulier comme ailerons, becquets, spoilers ou pare-chocs.
